# EUROPEAN PATENT APPLICATION

(11) **EP 2 977 118 A1**
(43) Date of publication of application: **27.01.2016**
(21) Application number: 14191692.4
(22) Date of filing: 04.11.2014
(51) Int. Cl.: B09B 3/00, C05D 9/00, C05G 3/04, C05F 7/00, B09B 1/00, B09C 1/00, C02F 11/12

(54) **METHOD OF SOIL SUBSTITUTE PRODUCTION FOR USE IN RECLAIMING EXCAVATIONS WITH IMPLEMENTATION OF WASTE DRILLING FLUID**

(30) Priority: 21.07.2014 PL 40894714
(71) Applicant: Politechnika Lubelska, 20-618 Lublin (PL); Uniwersytet Przyrodniczy, 20-950 Lublin (PL)
(72) Inventor: Pawlowska, Malgorzata, 20-710 Lublin (PL); Pawlowski, Lucjan, 20-710 Lublin (PL); Baran, Stanislaw, 20-448 Lublin (PL); Kwiatkowski, Zygmunt, 21-003 Ciecierzyn (PL); Wesolowski, Marian, 20-807 Lublin (PL); Pawlowski, Artur, 20-710 Lublin (PL); Cel, Wojciech, 97-300 Piotrków Trybunalski (PL); Kujawska, Justyna, 20-861 Lublin (PL)
(74) Representative: Kaminski, Piotr

(57) **Abstract**

Invention relates to a production method of soil substitute for reclaiming mining excavations with the use of waste drilling fluid, which is characterized by mixing waste drilling fluid in the amount of 30-50% by volume, preferably 50% with 50-70% by volume of sludge from sewage treatment plant, preferably 50%, the mixture is then separated using a centrifuge, wherein the liquid phase is separated from the solid phase; the former is redirected for treatment and the latter is mixed either with calcium oxide amounting up to 10% of weight or with coal ash amounting 15-30% of weight and the obtained product is mixed with ground gangue so that its contents amounted to 65-90 % .

## Description

The invention is a method of soil substitute production for use in reclaiming excavations with the implementation of waste drilling fluid.

Large amounts of liquid waste known as drilling mud are produced during the search for shale gas. It contains drilling fluid, rocks and compounds washed off from the drilled rocks. Previous methods of drilling waste utilization focused on separating the solid from the liquid phase and individual utilization of both.

In order to simplify the phase separation, coagulants are added. In the description of Polish patent PL 201552, the aluminium sulphate Al₂(SO₄)₃ in the amount of up to 15% of volume is added to the drilling fluid and mixed intensively until a homogenous liquid is obtained. According to the method presented in patent PL 368967, such liquid can be separated using a filter press, which allows to obtain the solid phase with up to 40% of dry mass.

The Polish patent PL 189842 proposes the use of liquid mineral coagulant containing 18% of Al₂O₃, in the amount of up to 10% of volume in relation to the weight of drilling fluid, which is then mixed until coagulation begins.

In the Polish patent PL 200969, liquid poly aluminium chloride in the amount of up to 15% of volume is added to the waste drilling fluid, then separated on a belt filter press and dewatered by pressing. The acquired material with high dry mass content can be used for soil reclamation or for waste deposit capping.

The Polish patent PL 212 941 presented the method that relies on transforming the solid phase separated from drilling fluid into fine-grained mineral form. The process involves homogenization and forming shapes, which are then dried and burned for about 2 hours in the temperature not exceeding 650°C. The obtained product is then ground and used as a cement additive.

The material obtained through the implementation of the methods described above, with high content of dry mass, is stored in special deposits or processed into other products. However, the utilization of liquid phase, which contains a variety of chemical compounds, remains problematic. Most often, it is pumped into drilling wells; alternatively - after treatment - it is used for field irrigation or dumped into surface waters.

The American patent US 4482459A proposed to employ membrane techniques during the treatment of the liquid obtained through phase separation of waste drilling fluid, which is done by adding a coagulant and controlling pH. It allows reuse of the recovered water for drilling.

The solution which does not require the initial phase separation, is the method of processing of waste drilling fluid into fine-grained granules, presented in the Polish patent PL 216255. This method relies on addition of highly reactive calcium oxide to the waste, with the preferable CaO content of 90% and in the amount of up to 300% of water content in waste. Such mixture is stirred intensively with the stirrer speed up to 180 RPM until exothermic reaction begins. Afterwards, the stirrer speed is optimally lowered below 60 RPM and mixing continues until water evaporates.

The principle of the inventive method of producing soil substitute for use in reclaiming mining excavations, with the use of waste drilling fluid, relays on mixing 30-50% by volume, preferably 50% of drilling fluid, with 50-70%, preferably 50% of sewage treatment sludge. The mixture is then separated using a centrifuge, wherein the liquid phase is separated from the solid phase and the liquid phase is redirected for waste treatment, while the dehydrated mixture of solid phase from waste drilling fluid and sludge from sewage treatment plant is mixed either with calcium oxide in the amount of up to 10 wt. % or with coal ash in the amount of 15-30 wt. % and the obtained product is mixed with ground gangue so that its content in the product amounted to 65% to 90%. The product obtained by method according to invention in the amount of 10-35% after mixing with ground gangue, can be used in reclamation of excavations, like the ones created after the mineral resources exploitation.

### Example 1

100 m³ of waste drilling fluid was mixed with 150 m³ of sludge from sewage treatment plant. The mixture was separated using a centrifuge in order to separate 55 m³ of solid phase from the liquid phase which was then redirected for treatment, while the dewatered mixture of the solid phase from waste drilling fluid and sludge from sewage treatment plant was mixed with 6 Mg of calcium oxide. The resulting product was mixed with 500 m³ of ground gangue. Then, the mixture was used to fill the excavation created during the exploitation of gravel for road construction and common osier was planted therein afterwards.

### Example 2

100 m³ of waste drilling fluid was mixed with 150 m³ of sludge from sewage treatment plant. The mixture was separated using a centrifuge and separated was 55 m³ of solid phase from the liquid phase, which was then redirected for treatment, while the dewatered mixture of the solid phase from waste drilling fluid and sludge from sewage treatment plant was mixed with 15 Mg of coal ash. The resulting product was mixed with 500 m³ of ground gangue. Then, the mixture was used to fill the excavation created during the exploitation of gravel for road construction and common osier was planted therein afterwards.

## Claims

1. Production method of soil substitute for reclaiming mining excavations with use of waste drilling fluid, **characterized by** mixing waste drilling fluid in the amount of 30-50% by volume, preferably 50%, with 50-70% by volume, preferably 50%, of sludge from sewage treatment plant, the obtained mixture is then separated using a centrifuge, wherein the liquid phase is separated from the solid phase, the liquid phase is redirected for waste treatment while the dehydrated mixture of solid phase from waste drilling fluid and sludge from sewage treatment plant is mixed either with calcium oxide in the amount of up to 10 wt. % or with coal ash in the amount of 15-30 wt. % and the obtained product is mixed with ground gangue so that its content in the product amounted to 65% to 90%.
